# FASCICULE DE BREVET EUROPEEN

(11) **EP 1 077 196 B1**
(45) Date de publication et mention de la délivrance du brevet: **13.07.2005**
(21) Numéro de dépôt: 00402260.4
(22) Date de dépôt: 09.08.2000
(51) Int. Cl.: B66F 9/065, B60G 17/005

(54) **Dispositif de correction de dévers pour véhicule à deux essieux**
Vorrichtung zum Korrigieren der Schiefstellung für ein zweiachsiges Fahrzeug
Tilt correction device for a vehicle with 2 axles

(30) Priorité: 18.08.1999 FR 9910608
(43) Date de publication de la demande: 21.02.2001
(73) Titulaire: Bobcat France SA, 44160 Pontchateau (FR)
(72) Inventeur: Fayat, Jean-Claude, 33290 Parempuyre (FR)
(74) Mandataire: Derambure, Christian

(56) Documents cités:
- DE-A- 2 450 236
- DE-A- 3 632 416
- US-A- 5 813 697

## Description

L'invention se rapporte au domaine technique des plates-formes à deux essieux, automotrices ou non, pourvues d'un contrôle de dévers manuel ou automatique.

L'invention concerne donc notamment, mais non exclusivement, les chariots élévateurs automoteurs du type comprenant au moins un bras télescopique unique, articulé dans la moitié arrière du châssis.

Par exemple, le document US-A-3 937 339 décrit un chariot pourvu de deux vérins de contrôle de dévers, disposés sensiblement à 90° l'un par rapport à l'autre entre le châssis et le pont avant, un système de mesure d'assiette permettant la commande desdits vérins.

On connait également du document US-A-5 813 697 un dispositif de correction de dévers pour plateforme à deux essieux selon le préambule de la revendication 1.

Les systèmes de corrections de dévers connus de l'art antérieur ne permettent qu'imparfaitement de maintenir une assiette convenable à une plate-forme à quatre roues telle qu'un chariot élévateur.

Tel est en particulier le cas pour les engins pour lesquels seul un essieu est oscillant, l'autre essieu étant fixe.

L'invention se rapporte à un système de contrôle de dévers pour plate-forme à deux essieux ne présentant pas les inconvénients des systèmes antérieurs et permettant en outre de réduire l'inclinaison de cette plate-forme au passage d'obstacles.

A cette fin, l'invention se rapporte, selon un premier aspect, à un dispositif de correction de dévers pour plate-forme à deux essieux, selon la revendication 1.

Selon d'autres caractéristiques prises seules ou en combinaison :
- les zones d'articulation des premiers et deuxièmes vérins aux essieux sont situées à une distance sensiblement égale à l'axe longitudinal médian de la plate-forme ;
- les premiers et deuxièmes vérins s'étendant selon deux angles égaux par rapport à la verticale ;
- les premiers et deuxièmes vérins s'étendent selon un angle inférieur à 45° par rapport à la verticale ;
- le châssis est articulé aux essieux par deux zones d'articulation disposées sensiblement à mi-largeur desdits essieux ;
- le circuit de commande des vérins comprend une électrovanne double effet ;
- Le circuit de commande comprend 2 valves d'équilibrage (ou clapet piloté) double, assurant la sécurité en cas de rupture de flexible ou de surpression. Ces valves sont maintenues ouvertes en fonctionnement normal par une alimentation en pression de gavage (ZO);
- le circuit de commande comprend un détecteur de niveau ou un interrupteur.

L'invention se rapporte, selon un deuxième aspect, à l'application d'un dispositif tel que présenté ci dessus à la correction de dévers de chariots élévateurs, le chariot élévateur étant notamment de type à bras télescopique, articulé sur l'arrière du châssis.

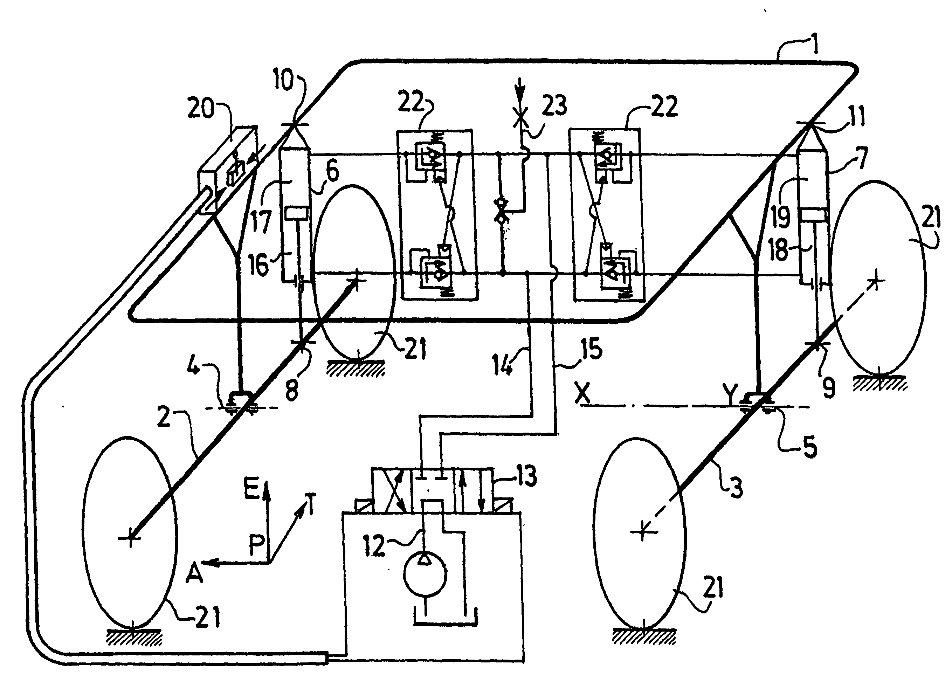

D'autres objets et avantages de l'invention apparaîtront au cours de la description suivante de modes de réalisation, description qui va être faîte en se référant à la figure unique annexée, qui est une vue en perspective schématique d'un système de contrôle de dévers selon l'invention, mis en place sur une plate-forme à quatre roues.

La plate-forme est représentée, afin de simplification, sur un sol sensiblement horizontal.

Le système de contrôle de dévers est schématisé en position neutre, c'est à dire n'entraînant pas un dévers du châssis 1 de cette plate-forme.

Le châssis 1 est représenté sur la figure par un contour de plaque plane

Ainsi que le comprendra l'homme du métier, la forme du châssis peut être en effet très variable, le système de contrôle de dévers pour plate-forme à deux essieux pouvant être mis en place pour des engins de types très variables, dont notamment mais non exclusivement les chariots élévateurs.

Chaque essieu supporte au moins deux roues dans la réalisation représentée.

Afin de simplification, la plate-forme sera supposée à quatre roues.

Les quatre roues ou seulement deux d'entre elles peuvent être motrices.

Les quatre roues ou seulement deux d'entre elles peuvent être directrices.

Deux essieux 2,3 sont montés articulés au châssis 1.

Afin de simplification, le châssis 1 sera supposé représenté tel que sa marche avant corresponde à la direction A de la figure.

Il est entendu toutefois que le système de correction de dévers est symétrique et que la marche avant du châssis pourrait correspondre à la direction opposée à la direction A.
Cette direction de marche A sera dite longitudinale.

Une direction T, transversale, perpendiculaire à la direction A définit avec celle-ci un plan P, une direction E d'élévation, perpendiculaire à ce plan P formant avec les directions A et T un trièdre direct.

Les termes « longueur », « avant », « arrière » seront employés en référence à la première direction A.

Les termes « largeurs », « gauche », « droite » seront employés en référence à la deuxième direction T.

Les termes « hauteurs », « épaisseurs » seront employés en référence à la troisième direction E.

L'essieu avant 2 est articulé au châssis 1 en une zone 4 correspondant sensiblement à sa mi-largeur.

De même, l'essieu arrière 3 est articulé au châssis 1 en une zone 5 correspondant sensiblement à sa mi-largeur.

L'essieu avant 2 est par ailleurs relié au châssis 1 par un vérin 6.

De même, l'essieu arrière 3 est relié au châssis par un vérin 7.

Les deux vérins 6, 7 s'étendent, dans la réalisation représentée, sensiblement parallèlement entre eux et suivant la direction E et sont articulés à leurs essieux respectifs 2,3 en des zones d'articulation 8,9 situées sensiblement à une même distance de l'axe longitudinal médian XX de la plate-forme.

Les deux vérins 6,7 sont également articulés au châssis 1 en des zones d'articulation 10,11, placées dans le mode de réalisation représenté à l'aplomb des zones d'articulation 8,9 des vérins aux essieux 2,3.

Dans d'autres réalisations, non représentées, les vérins 6,7 ne sont pas verticaux mais inclinés d'un angle identique par rapport à la direction d'élévation E, angle compris entre quelques degrés et 45° par rapport à la direction d'élévation E.

Les vérins peuvent être de type hydraulique, pneumatique, oléohydraulique ou oléopneumatique.

La tige des vérins 6,7 peut être orientée vers le châssis 1 ou à l'inverse vers les essieux 2,3.

Les vérins sont de type double effet.

Les vérins 6,7 sont branchés en parallèles sur un circuit de commande 12.

Dans une réalisation, le circuit de commande comprend une électrovanne double effet 13 reliée par deux faisceaux 14,15 aux deux chambres 16,17,18,19 de chacun des vérins 6,7.

L'électrovanne 13, dans un mode de réalisation, est commandée par un pendule ou un interrupteur 20, de sorte que le châssis 1 de la plate-forme puisse être maintenu sensiblement horizontal, dans une certaine gamme de profils en travers du sol sur lequel roule la plate-forme.

La communication entre les quatre chambres 16,17,18,19 des vérins 6,7 assure un meilleur maintien en appui au sol des quatre roues 21 de la plate-forme, par rapport aux dispositifs connus antérieurement.

Le circuit de commande 12 comprend deux valves d'équilibrage 22 ou clapets pilotés doubles, assurant la sécurité en cas de rupture de flexible ou de surpression.
Ces valves 22 sont maintenues ouvertes en fonctionnement normal par une alimentation en pression de gavage 23.

Par rapport à un dispositif de correction de dévers conventionnel, dans lequel un seul des essieux est oscillant, le système décrit ci-dessus permet de réduire l'inclinaison du châssis d'un facteur deux.

## Revendications

1. Dispositif de correction de dévers pour plate-forme à deux essieux, ladite plate-forme comprenant un châssis (1) sur lequel sont articulés les essieux (2,3), ledit dispositif comprenant au moins un premier vérin (6) articulé pendant l'utilisation du dispositif entre l'essieu avant (2) et le châssis (1) et au moins un deuxième vérin (7) articulé pendant l'utilisation du dispositif entre l'essieu arrière (3) et le châssis (1), les deux vérins étant connectés en parallèle sur un même circuit de commande (12), **caractérisé en ce que** les premiers et deuxièmes vérins (6,7) sont de type double effet et sont commandés directement et simultanément par un même circuit de commande.

2. Dispositif selon la revendication 1, **caractérisé en ce que** les zones d'articulation des premiers et deuxièmes vérins (6,7) aux essieux (2,3) sont situées à une distance sensiblement égale à l'axe longitudinal médian de la plate-forme.

3. Dispositif selon la revendication 1 ou 2, **caractérisé en ce que** les premiers et deuxièmes vérins (6,7) s'étendent selon deux angles égaux par rapport à la verticale.

4. Dispositif selon la revendication 3, **caractérisé en ce que** les premiers et deuxièmes vérins s'étendent selon un angle inférieur à 45° par rapport à la verticale.

5. Dispositif selon l'une quelconque des revendications 1 à 4, **caractérisé en ce que** le châssis (1) est articulé aux essieux (2,3) par deux zones d'articulation (4,5) disposées sensiblement à mi-largeur desdits essieux (2,3).

6. Dispositif selon l'une quelconque des revendications 1 à 5, **caractérisée en ce que** le circuit de commande des vérins comprend une électrovanne double effet (13).

7. Dispositif selon l'une quelconque des revendications 1 à 6, **caractérisée en ce que** le circuit de commande des vérins comprend deux valves d'équilibrage (ou clapets pilotes) double (22).

8. Dispositif selon l'une quelconque des revendications 1 à 7, **caractérisée en ce que** le circuit de commande comprend un détecteur de niveau (20) ou un interrupteur.

9. Application d'un dispositif tel que présenté dans l'une quelconque des revendications 1 à 8 à la correction de dévers de chariots élévateurs.

10. Application selon la revendication 9, **caractérisée en ce que** le chariot élévateur est de type à bras télescopique, articulé sur l'arrière du châssis (1).

## Patentansprüche

1. Überhöhungskorrekturvorrichtung für ein Plattform mit zwei Achsen, wobei die vorgenannte Plattform einen Rahmen
(1) umfasst, auf dem die Achsen (2, 3) beweglich verbunden sind, wobei die vorgenannte Vorrichtung mindestens einen ersten Zylinder (6) umfasst, der während des Einsatzes der Vorrichtung zwischen der vorderen Achse
(2) und dem Rahmen (1) beweglich ist, und mindestens einen zweiten Zylinder (7) umfasst, der während des Einsatzes der Vorrichtung zwischen der hinteren Achse (3) und dem Rahmen (1) beweglich ist, wobei die beiden Zylinder parallel an demselben Steuerkreis (12) angeschlossen sind, **dadurch gekennzeichnet, dass** der erste und der zweite Zylinder (6, 7) doppeltwirkende Zylinder sind und dass sie direkt und simultan durch denselben Steuerkreis gesteuert werden.

2. Vorrichtung nach Anspruch 1, **dadurch gekennzeichnet, dass** sich die Gelenkzonen des erstens und des zweiten Zylinders (6, 7) an den Achsen (2, 3) in einem Abstand befinden, der fast der von der mittleren Längsachse der Plattform gleichkommt.

3. Vorrichtung nach Anspruch 1 oder 2, **dadurch gekennzeichnet, dass** sich der erste und der zweite Zylinder (6, 7) nach zwei gleichen Winkeln gegenüber der Senkrechte erstrecken.

4. Vorrichtung nach Anspruch 3, **dadurch gekennzeichnet, dass** sich der erste und der zweite Zylinder (6, 7) nach einem Winkel unter 45° gegenüber der Senkrechte erstrecken.

5. Vorrichtung nach einem der Ansprüche 1 bis 4, **dadurch gekennzeichnet, dass** der Rahmen (1) an den Achsen (2, 3) durch zwei Gelenkzonen (4, 5) beweglich verbunden ist, die etwa auf halber Breite der genannten Achsen (2, 3) angeordnet sind.

6. Vorrichtung nach einem der Ansprüche 1 bis 5, **dadurch gekennzeichnet, dass** der Steuerkreis der Zylinder ein doppeltwirkendes Elektroventil (13) umfasst.

7. Vorrichtung nach einem der Ansprüche 1 bis 6, **dadurch gekennzeichnet, dass** der Steuerkreis der Zylinder zwei doppelte Ausgleichsventile (oder Steuerklappen) (22) umfasst.

8. Vorrichtung nach einem der Ansprüche 1 bis 7, **dadurch gekennzeichnet, dass** der Steuerkreis einen Füllstandsanzeiger (20) oder einen Schalter umfasst.

9. Anwendung einer Vorrichtung, wie sie in einer der Ansprüche 1 bis 8 dargelegt wird, auf die Überhöhungskorrektur von Hubwagen.

10. Anwendung nach Anspruch 9, **dadurch gekennzeichnet, dass** der Hubwagen ein Hubwagen mit Teleskoparm ist, der hinten am Rahmen (1) beweglich ist.

## Claims

1. Cant correction device for a platform with two axles, the said platform comprising a chassis (1) on which the axles (2, 3) are articulated, the said device comprising at least a first ram (6) articulated between the front axle (2) and the chassis (1) during use of the device, and at least a second ram (7) articulated between the rear axle (3) and the chassis (1) during use of the device, the two rams being connected in parallel on the same control circuit (12), **characterised in that** the first and second rams (6, 7) are of the double acting type and are controlled directly and simultaneously by the same control circuit.

2. Device according to claim 1, **characterised in that** the articulations zones of the first and second rams (6, 7) of the axles (2, 3) are located at an approximately equal distance from the median longitudinal centre line of the platform.

3. Device according to claim 1 or 2, **characterised in that** the first and second rams (6, 7) extend at two equal angles from the vertical.

4. Device according to claim 3, **characterised in that** the first and second rams extend at an angle of less than 45° from the vertical.

5. Device according to any one of claims 1 to 4, **characterised in that** the chassis (1) is articulated to the axles (2, 3) by two articulation zones (4, 5) located at approximately mid-width of the said axles (2, 3).

6. Device according to any one of claims 1 to 5, **characterised in that** the ram control circuit comprises a double acting solenoid valve (13).

7. Device according to any one of claims 1 to 6, **characterised in that** the ram control circuit comprises two double balancing valves (or control valves) (22).

8. Device according to any one of claims 1 to 7, **characterised in that** the control circuit comprises a level detector (20) or a switch.

9. Application of a device like that presented in any one of claims 1 to 8 to correction of the cant of forklift trucks.

10. Application according to claim 9, **characterised in that** the forklift truck is of the telescopic arm type articulated on the back of the chassis (1).
